# EUROPEAN PATENT SPECIFICATION

(11) **EP 3 668 205 B1**
(45) Date of publication and mention of the grant of the patent: **29.09.2021**
(21) Application number: 18843319.7
(22) Date of filing: 01.08.2018
(51) Int. Cl.: H04W 64/00, H04W 24/10

(54) **POSITIONING AND MEASUREMENT REPORTING METHOD AND APPARATUS**
VERFAHREN UND VORRICHTUNG ZUR POSITIONS- UND MESSUNGSMELDUNG
PROCÉDÉ ET APPAREIL DE LOCALISATION ET DE NOTIFICATION DE MESURE

(30) Priority: 09.08.2017 CN 201710676429
(43) Date of publication of application: 17.06.2020
(73) Proprietor: China Academy of Telecommunications Technology, Hai Dian District Beijing 100191 (CN)
(72) Inventor: XING, Yanping, Beijing 100191 (CN); DA, Ren, Beijing 100191 (CN); QUAN, Haiyang, Beijing 100191 (CN)
(74) Representative: Nony
(86) International application number: PCT/CN2018/098165
(87) International publication number: WO 2019/029422

(56) References cited:
- WO-A1-2016/036154
- WO-A1-2016/114858
- WO-A1-2016/114858
- CN-A- 103 209 475
- CN-A- 105 794 255
- CN-A- 105 940 708
- "3rd Generation Partnership Project; Technical Specification Group Radio Access Network; Study on New Radio (NR) access technology (Release 14)", 3GPP STANDARD ; TECHNICAL SPECIFICATION ; 3GPP TR 38.912, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. V14.1.0, 3 August 2017 (2017-08-03), pages 1-74, XP051336695, [retrieved on 2017-08-03]

## Description

### Field

The present application relates to the field of communication technologies and particularly to a positioning and measurement reporting method and apparatus.

### Background

The Next generation Radio (NR) system of the 5th Generation (5G) mobile communication system defines the following four downlink reference signals:

### 1. NR Synchronization Signal block (SS block):

In the 5G NR system, the downlink reference signals in the SS block include: Primary Synchronization Signal (PSS), Secondary Synchronization Signal (SSS), and DeModulation Reference Signal (DM-RS) for the Physical Broadcast CHannel (PBCH).

One SS burst contains a plurality of SS blocks, and one SS burst set includes a plurality of SS bursts.

The maximum number of the SS blocks which can be included in one SS burst set is determined by the carrier frequency. Specifically, for the carrier frequencies less than 3GHz, one SS burst set may include at most 4 SS blocks; for the carrier frequencies of 3GHz∼6GHz, one SS burst set may include at most 8 SS blocks; for the carrier frequencies greater than 6GHz, one SS burst set may include at most 64 SS blocks. The SS burst set may be sent in cycle of {5, 10, 20, 40, 80, 160} ms. The transmission of all the SS blocks in one SS burst set is completed in the window of 5ms. The optional positions for transmitting the SS blocks during the transmission period of 5ms are specified in the protocol.

To enhance the coverage, the beam scanning is supported, that is, the SS blocks are transmitted by different beams at different times. Thus, different users may detect the PSS/SSS at different symbol positions, so there is a need to further indicate the time index of the SS block.

### 2. Reference Signal Received Power of SS Blocks (SS-RSRP):

The NR system supports the User Equipment (UE) to perform the SS-RSRP measurement. The SS-RSRP is determined according to the measurement result of the secondary synchronization signal. The UE may further additionally use the DM-RS of the PBCH to assist in determining the RSRP.

### 3. Channel State Information-Reference Signal (CSI-RS):

For the purpose of beam management and Radio Resource Management (RRM) and others, the 5G NR system supports the UE-specialized CSI-RS.

### 4. Reference Signal Received Power of Channel State Information (CSI-RSRP):

The NR system supports the UE to perform the CSI-RSRP measurement. The UE obtains the CSI-RSRP by measuring the Resource Element (RE) bearing the CSI-RS.

However, no UE positioning scheme has been introduced for the 5G NR system at present.
In application WO 2016/114858 A1, a Long Term Evolution Advanced (LTE-A) location server, user equipment (UE) and evolved Node-B (eNB) are generally described. Information may be transmitted to the UE from the location server. The transmission may be triggered by the location server or another entity requesting the UE location. The information may permit the UE to receive a discovery reference signal (DRS) from at least one eNB. The information may contain an indication of measurements to be performed using the DRS. The UE may measure Reference Signal Received Power (RSRP) or Reference Signal Time Difference (RSTD) of the DRS. The UE may send the measurement information to the location server where the UE location is estimated. The UE location may be based on measurements of the DRS and a positioning reference signal (PRS) from one or more eNBs to obtain the Observed Time Difference of Arrival (OTDOA) or Enhanced Cell ID (ECID).
In "Study on New Radio (NR) access technology (Release 14)", 3GPP TR 38.912, V14.1.0, XP051336695, it provides a brief discussion of synchronization signal and DL broadcast signal channel structure.

### Summary

The embodiments of the present application provides a positioning and measurement reporting method and apparatus, to implement the UE positioning scheme of the 5G NR system.

A positioning method performed by a network side positioning apparatus according to independent Claim 1 comprises:
determining a measurement configuration message of a User Equipment, UE, where the measurement configuration message includes UE-level measurement reference signal configuration information;
sending the measurement configuration message to the UE to instruct the UE to perform measurement and reportinging;
positioning the UE based on a measurement result reported by the UE;
where the UE-level measurement reference signal configuration information specifically includes: Synchronization Signal block, SS block, configuration information;
the measurement result comprises: Reference Signal Received Power of SS Blocks, SS-RSRP, and/or Time Difference of Arrival of SS blocks, SS-TDOA;
where the measurement result further comprises:
   a cell identity and an SS block time index, corresponding to the SS-RSRP.

With this method, the measurement configuration message of the UE is determined, where the measurement configuration message includes the UE-level measurement reference signal configuration information; the measurement configuration message is sent to the UE to instruct the UE to perform the measurement and reporting; and the UE is positioned based on the measurement result reported by the UE, thereby implementing the UE positioning scheme based on the reference signal defined by the 5G NR system.

Optionally, the SS block configuration information includes SS block configuration information of neighboring cells.

Optionally, the UE-level measurement reference signal configuration information specifically includes: Channel State Information-Reference Signal, CSI-RS, configuration information.

Optionally, the measurement result includes one or a combination of:
Reference Signal Received Power of Channel State Information, CSI-RSRP, and CSI-RS index; and
Time Difference of Arrival, TDOA, of CSI-RSs.

Optionally, the measurement configuration message and/or the measurement result is/are transmitted by a radio resource control protocol message or 5G positioning protocol message.

A measurement reporting method performed by a user equipment according to independent Claim 4 comprises:
obtaining a measurement configuration message of a User Equipment, UE, where the measurement configuration message includes UE-level measurement reference signal configuration information;
performing a measurement according to the measurement configuration message and reporting a measurement result;
where the UE-level measurement reference signal configuration information specifically includes: Synchronization Signal block, SS block, configuration information;
where the measurement result comprises:
   Reference Signal Received Power of SS Blocks, SS-RSRP, and/or Time Difference of Arrival of SS blocks, SS-TDOA;
where the measurement result further comprises:
   a cell identity and an SS block time index, corresponding to the SS-RSRP.

Optionally, the SS block configuration information includes SS block configuration information of neighboring cells.

Optionally, the UE-level measurement reference signal configuration information specifically includes: Channel State Information-Reference Signal, CSI-RS, configuration information.

Optionally, the measurement result includes one or a combination of:
Reference Signal Received Power of Channel State Information, CSI-RSRP, and CSI-RS index;
Time Difference of Arrival, TDOA, of CSI-RSs.

Optionally, the measurement configuration message and/or the measurement result is/are transmitted by a radio resource control protocol message or 5G positioning protocol message.

Corresponding to the above-mentioned methods, the embodiments of the present application further provide the following apparatuses.

A network side positioning apparatus according to independent Claim 7 comprises:
a determining unit configured to determine a measurement configuration message of a User Equipment, UE, where the measurement configuration message includes UE-level measurement reference signal configuration information;
a sending unit configured to send the measurement configuration message to the UE to instruct the UE to perform measurement and reporting;
a measurement result processing unit configured to position the UE based on a measurement result reported by the UE;
where the UE-level measurement reference signal configuration information particularly comprises: Synchronization Signal block, SS block, configuration information;
where the measurement result comprises: Reference Signal Received Power of SS Blocks, SS-RSRP, and/or Time Difference of Arrival of SS blocks, SS-TDOA;
where the measurement result further comprises:
   a cell identity and an SS block time index, corresponding to the SS-RSRP.

Optionally, the SS block configuration information includes SS block configuration information of neighboring cells.

Optionally, the UE-level measurement reference signal configuration information specifically includes: Channel State Information-Reference Signal, CSI-RS, configuration information.

Optionally, the measurement result includes one or a combination of:
Reference Signal Received Power of Channel State Information, CSI-RSRP, and CSI-RS index; and
Time Difference of Arrival, TDOA, of CSI-RSs.

Optionally, the measurement configuration message and/or the measurement result is/are transmitted by a radio resource control protocol message or 5G positioning protocol message.

A measurement reporting apparatus in a user equipment according to independent Claim

10 comprises:
an obtaining unit configured to obtain a measurement configuration message of a User Equipment, UE, where the measurement configuration message includes UE-level measurement reference signal configuration information;
a reporting unit configured to perform measurement according to the measurement configuration message and report a measurement result;
wherein the UE-level measurement reference signal configuration information particularly comprises: Synchronization Signal block, SS block, configuration information;
wherein the measurement result comprises:
   Reference Signal Received Power of SS Blocks, SS-RSRP, and/or Time Difference of Arrival of SS blocks, SS-TDOA;
wherein the measurement result further comprises:
   a cell identity and an SS block time index, corresponding to the SS-RSRP.

Optionally, the SS block configuration information includes SS block configuration information of neighboring cells.

Optionally, the UE-level measurement reference signal configuration information specifically includes: Channel State Information-Reference Signal, CSI-RS, configuration information.

Optionally, the measurement result includes one or a combination of:
Reference Signal Received Power of Channel State Information, CSI-RSRP, and CSI-RS index; and
Time Difference of Arrival, TDOA, of CSI-RSs.

Optionally, the measurement configuration message and/or the measurement result is/are transmitted by a radio resource control protocol message or 5G positioning protocol message.

### Brief Description of the Drawings

In order to illustrate the technical solutions in the embodiments of the present application more clearly, the accompanying figures which need to be used in describing the embodiments will be introduced below briefly. Obviously the accompanying figures described below are only some embodiments of the present application, and other accompanying figures can also be obtained by those ordinary skilled in the art according to these accompanying figures without creative labor.
Fig.1 is a schematic diagram of 64 positions available for one SS block burst set when the carrier frequency is greater than 6GHz provided by an embodiment of the present application;
Fig.2 is a schematic diagram illustrating the allocation of different SS block positions for different cells in one SS block burst set provided by an embodiment of the present application;
Fig.3 is a schematic diagram of the information of the SS blocks that the terminal UE can detect notified by the network side in advance provided by an embodiment of the present application;
Fig.4 is a flow schematic diagram of a positioning method at the network side provided by an embodiment of the present application;
Fig.5 is a flow schematic diagram of a measurement reporting method at the UE side provided by an embodiment of the present application;
Fig.6 is a flow schematic diagram of positioning through the RRC protocol provided by an embodiment of the present application;
Fig.7 is a flow schematic diagram of positioning through the LPP protocol provided by an embodiment of the present application;
Fig.8 is a structural schematic diagram of a positioning apparatus at the network side provided by an embodiment of the present application;
Fig.9 is a structural schematic diagram of a measurement reporting apparatus at the UE side provided by an embodiment of the present application;
Fig.10 is a structural schematic diagram of a positioning apparatus at the network side provided by an embodiment of the present application;
Fig.11 is a structural schematic diagram of a measurement reporting apparatus at the UE side provided by an embodiment of the present application.

### Detailed Description of the Embodiments

In order to make the purposes, technical solutions and advantages of the invention clearer, the technical solutions in the embodiments of the invention will be described clearly and completely below in combination with the accompanying drawings in the embodiments of the invention. Obviously the described embodiments are a part of the embodiments of the invention but not all the embodiments. Based upon the embodiments of the invention, all of other embodiments obtained by those ordinary skilled in the art without creative work pertain to the protection scope of the invention.

It should be understood that the technical solutions of the invention can be applied to various communication systems, for example, Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced long term evolution (LTE-A) system, Universal Mobile Telecommunication System (UMTS), New Radio (NR) and the like.

It should be further understood that the User Equipment (UE) includes but not limited to a Mobile Station (MS), a mobile terminal, a mobile telephone, a handset, a portable equipment or the like in the embodiments of the invention. This user equipment can communicate with one or more core networks via the Radio Access Network (RAN), for example, the user equipment can be a mobile telephone (or called "cellular" telephone), a computer with the wireless communication function, or the like. The user equipment can also be a portable, pocket, handheld, computer built-in or vehicle-carried mobile device.

In the embodiments of the invention, the base station (e.g., access point) can mean the device in the access network communicating with the wireless terminal via one or more sectors over the air interface. The base station can be used to perform the inter-conversion between the received air frame and the IP packet, and used as the router between the wireless terminal and the rest of the access network, where the rest of the access network may include Internet Protocol (IP) networks. The base station can further coordinate the attribute management of the air interface. For example, the base station can be the Base Transceiver Station (BTS) in the GSM or CDMA, or can be the NodeB in the TD-SCDMA or WCDMA, or can be the evolutional Node B (eNodeB or eNB or e-NodeB) in the LTE, or can be the gNB in the 5G NR, which is not limited in the invention.

The embodiments of the present application provides a positioning and measurement reporting method and apparatus, so as to implement the UE positioning scheme of the 5G NR system.

The technical solution provided by the embodiments of the present application uses the downlink reference signal in the 5G NR system to support the terminal positioning in the 5G NR system, and the specific introduction is as follows.

The terminal UE obtains the UE-level measurement configuration message from the network side, where the measurement configuration message contains the UE-level measurement reference signal configuration information. UE performs the measurement based on the measurement configuration message and reports the measurement result, and the network-side device positions the UE according to the measurement result.

Here the measurement configuration message may specifically includes the SS block configuration message or CSI-RS configuration message.

The SS block configuration message includes the SS block configuration message of the neighboring cells (non-serving cells).

When the measurement configuration message specifically includes the SS block configuration message, the measurement result reported by UE includes: SS-RSRP and/or Time Difference of Arrival of SS Blocks (SS-TDOA), and may further include: the cell identity and/or SS block time index, corresponding to the SS-RSRP; where the SS-TDOA refers to the relative time difference between the SS block signals of two cells received at the terminal side.

When the measurement configuration message specifically includes the CSI-RS configuration message, UE reports the CSI-RSRP and CSI-RS index, and/or CSI-RS TDOA measurement result. Here, the CSI-RS TDOA refers to the relative time difference between the CSI-RS signals of two cells received at the terminal side.

The measurement configuration message and/or the measurement result is/are transmitted by the Radio Resource Control (RRC) protocol or 5G positioning protocol message.

The illustration of two specific embodiments will be presented below.

First embodiment: when the positioning is performed based on the downlink reference signal in the SS block, the specific flow includes the following steps.

Step 1: the terminal obtains the configuration information of the SS blocks of the serving cell and/or neighboring cells from the network side.

In order to measure the downlink reference signal in the SS block, the network side needs to notify the UE of the configuration information of the SS block including the time-frequency resource configuration of the SS block.

The detection performance of the reference signal in the SS block depends on the signal strength and interference level. In order to support the use of the reference signal in the SS block for UE positioning, the network-side device should properly configure the sending of the SS blocks of the serving cell and the neighboring cells to support the UE positioning. Specifically, the network-side device may design and adjust the transmission directions of the SS blocks and/or use the SS block muting to avoid or reduce the mutual interference of the SS blocks from the neighboring cells and improve the detection performance of the reference signals in the SS block.

The appropriate adjustment of the transmission directions of the SS block may avoid the spatial overlapping of the SS block signals, reduce the interference caused by the mutual overlapping of the SS block transmissions of multiple cells, and improve the detection performance of the SS block. For example, if the SS blocks of two neighboring cells are transmitted simultaneously at the same time but the transmission beam directions are opposite, the SS block signals from the two neighboring cells may not interfere with each other. How to adjust the transmission directions of the SS blocks of the neighboring cells to thereby effectively eliminate the overlap between the SS block signals may be implemented depending on the network.

For the synchronized NR system, candidate SS block transmission positions overlap in time. In order to improve the detection performance of the SS blocks of the neighboring cells, e.g., minimize the interference, the sending of the partial SS blocks may be closed, e.g., by using the SS block muting patterns (silent mode), to avoid the overlapping of the SS block transmission positions in time. The design of the SS block muting pattern may be diverse. A simplest and most direct way is to use '0' to represent the position where no SS block is transmitted and '1' to represent the position where the SS block is actually transmitted.

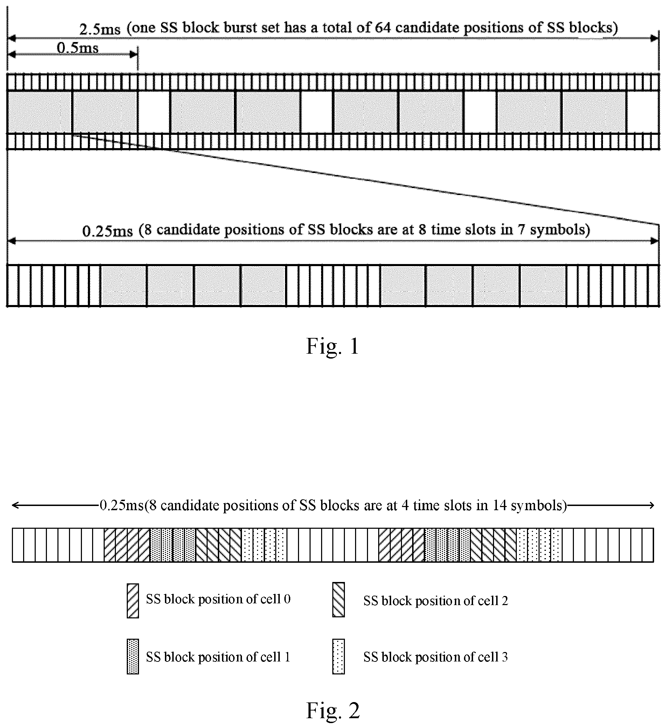

For example, Fig.1 shows there are 64 candidate SS block transmission positions tj (j=0,...,63) in one SS block burst set.

Referring to Fig.2, it is assumed that the serving cell of the UE is Co, and has three neighboring cells {C₁, C₂, C₃}. The network-side device may configure the 64-bits muting patterns for the cell Cᵢ (i=0,1,2,3) by setting positions tᵢ₊₄ₖ=1 (k=0,...15) and setting other bits as 0, which means that the SS blocks are transmitted only at the candidate positions of tᵢ₊₄ₖ (k=0,...15) for the cell Cᵢ (i=0,1,2,3). In such way, the network avoid the interference caused by the mutual overlapping of the SS block transmissions of multiple cells, increase the signal to noise ratio, and facilitate the UE to detect the SS blocks from these cells.

In order to support the NR UE positioning, the network needs to notify the UE of the muting SS blocks or the SS blocks which are actually sent from the serving cell and/or neighboring cells, to help the UE to measure the SS blocks at the configured period.

According to the approximate position of the UE and the propagation direction of the neighboring cells, the network side may further inform the UE of the cells under which the SS blocks are most likely to be detected by the UE.

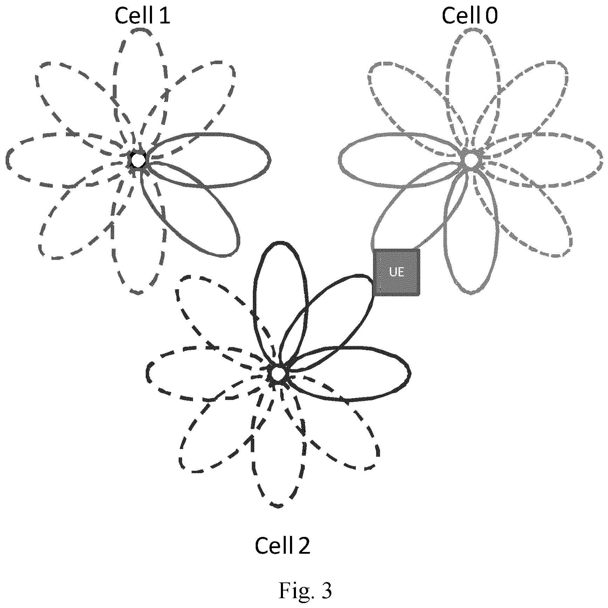

For the UE in the connected state, the network may know the approximate position of the UE according to the direction of the service beam as well as the time difference between reception and transmission Rx-Tx of the UE (UE Rx-Tx Time Difference) and other information. Then the network may reckon the neighboring cells of which the SS blocks may be detected by the UE according to the approximate position of the UE and the SS block transmission of the neighboring cells, for example, the SS block represented by the solid line in Fig.3. The network may inform the UE of the information about these SS blocks in advance. The information will facilitate the UE to detect these SS blocks quickly to support the NR UE positioning.

Step 2: the terminal side measures the SS-RSRP of the serving cell and/or neighboring cells according to the configuration information; and measures the SS-TDOA between different cells.

According to the SS block configuration information of the serving cell and neighboring cells, the UE may obtain the measurement result of the signal power (i.e., SS-RSRP of the serving cell and neighboring cells) by detecting the reference signal in the SS block.

Furthermore, the SS block is transmitted at the predefined OFDM symbol position (i.e., predefined time). When a UE detects the SS block of a cell, the UE may estimate the arrival time of the SS block after it is sent from the cell. If the UE detects the SS blocks of more than one cell, the UE may measure the Time Difference of Arrival of SS Blocks (SS-TDOA) of the reference signals from different cells. Specifically, the measurement may be performed according to the secondary synchronization signals in the SS blocks, and the DM-RS of the PBCH may further additionally used to assist in determining the SS-TDOA.

Step 3: the terminal reports the measurement result of the SS-RSRP and/or SS-TDOA, and the corresponding cell identity and SS block time index.

In order to support the NR UE positioning, the network may configure the UE to report the SS-RSRP or SS-TDOA, or report them at the same time. When the measurement result of the SS-RSRP is reported, the corresponding cell ID and SS block index should be reported at the same time. Here, the SS block index information contributes to the determination of the direction of the UE with respect to the cell position, since the transmission directions of the various SS blocks are different.

Second embodiment: when the positioning is performed by using the CSI-RS, the specific flow includes the following steps.

Step 1: the terminal obtains the configuration information of the CSI-RS of the serving cell and/or neighboring cells from the network side.

The network needs to notify the terminal of the transmission configuration of the CSI-RS, including the time-frequency position of the CSI-RS.

If the network configures the CSI-RS for supporting the data communication (for example, CSI-RS for beam management and/or RRM measurement) for a UE, the network may reuse this CSI-RS to support the NR UE positioning.

The capability of detecting the CSI-RS may be enhanced by coordinating the CSI-RS transmissions of the respective cells. A solution is to configure the same or overlapping CSI-RS resources for the CSI-RS transmissions of the neighboring cells to avoid the interference from the data transmission. After such configuration, the interference from the neighboring cells may be estimated and eliminated through the known CSI-RS resource configuration, thereby enhancing the capability of detecting the CSI-RS. On this basis, and similarly to the muting design idea of the SS block, the sending power of the CSI-RS on some overlapping CSI-RS resources of some cells may also be set as 0. This method eliminates the interference from the CSI-RS transmissions of some neighboring cells, thus further enhancing the capability of detecting the CSI-RS from other neighboring cells. The CSI-RS is also highly dependent on the beam direction. The CSI-RS transmissions from two cells with the overlapping time-frequency resources will not interfere with each other if their beam directions do not overlap. Thus, it is not necessary to set the sending power of the CSI-RS of the neighboring cells with the overlapping time-frequency resources but with non-overlapping beam directions as 0. In such way, the network reduces the interference of the signals with each other according to the overlapping characteristics of the signals in time-frequency/beam direction.

For the UE in the connected state, the network may further know the approximate position of the UE according to the direction of the service beam as well as the time difference between reception and transmission Rx-Tx of the UE (UE Rx-Tx Time Difference) and other information. Then the network may roughly know the UE may detect which CSI-RS from which cells according to the approximate position of the UE and the beam direction of sending the CSI-RS of the neighboring cells. These information may help the UE detect the CSI-RS quickly, to thereby support the NR UE positioning.

Step 2: the terminal side measures the CSI-RSRP of the serving cell and/or neighboring cells according to the configuration information, and measures the TDOA between different cells.

According to the CSI-RS configuration information of the serving cell and neighboring cells, the UE may obtain the CSI-RSRP by detecting the CSI-RS.

The CSI-RS signal is transmitted at the preset time and frequency, and these preset parameters are known for the UE. Thus, when the UE performs the CSI-RS measurement, it may detect the Time of Arrival (TOA) of the CSI-RS signal. If the UE detects the CSI-RS signals of multiple cells, it may calculate the Time Difference of Arrival of CSI-RSs (CSI-TDOA) among these cells accordingly.

Step 3: the terminal reports the measurement result of the CSI-RSRP and/or CSI-TDOA and the corresponding cell identity and CSI-RS index.

The network side configures the terminal to report the measurement result of the CSI-RSRP and/or CSI-TDOA for positioning the NR terminal. The reported measurement result of the CSI-RSRP should be associated with the cell identity and CSI-RS index.

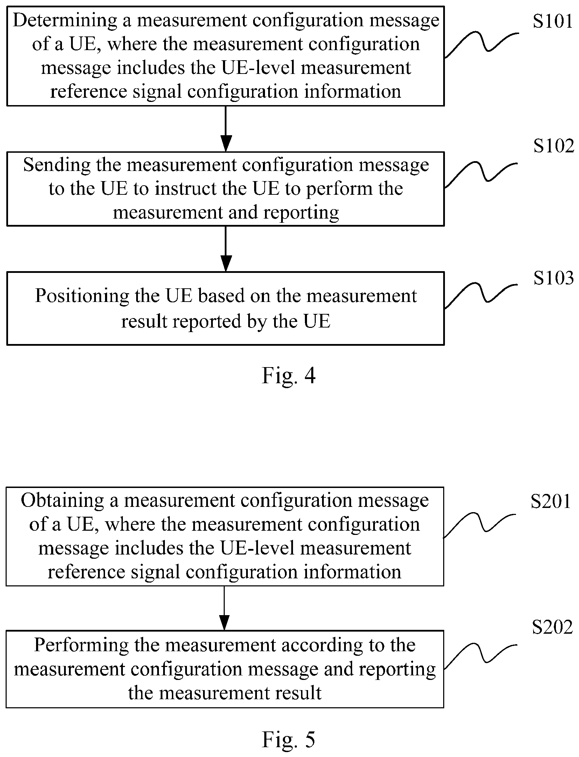

To sum up, referring to Fig.4, at the network side, a positioning method provided by an embodiment of the present application includes:
S101: determining a measurement configuration message of a UE, where the measurement configuration message includes the UE-level measurement reference signal configuration information;
S102: sending the measurement configuration message to the UE to instruct the UE to perform the measurement and reporting;
S103: positioning the UE based on the measurement result reported by the UE.

Here, the step S103 may be understood as: a network-side device uses the received measurement result reported by the UE, and the UE is positioned directly by the network-side device; or may be understood as: a network-side device receives the measurement result reported by the UE and then sends it to another network-side device, and the UE is positioned by the another network-side device.

Optionally, the UE-level measurement reference signal configuration information specifically includes: Synchronization Signal block, SS block, configuration information.

Optionally, the SS block configuration information includes SS block configuration information of neighboring cells.

Optionally, the measurement result includes:
Reference Signal Received Power of SS Blocks, SS-RSRP, and/or Time Difference of Arrival of SS blocks, SS-TDOA.

Optionally, the measurement result further includes:
the cell identity and/or SS block time index, corresponding to the SS-RSRP.

Optionally, the UE-level measurement reference signal configuration information specifically includes: Channel State Information-Reference Signal, CSI-RS, configuration information.

Optionally, the measurement result includes one or a combination of:
Reference Signal Received Power of Channel State Information, CSI-RSRP, and CSI-RS index;
Time Difference of Arrival, TDOA, of CSI-RSs.

Optionally, the measurement configuration message and/or the measurement result is/are transmitted by a radio resource control protocol message or 5G positioning protocol message.

Accordingly, referring to Fig.5, at the UE side, a measurement reporting method provided by an embodiment of the present application includes:
S201: obtaining a measurement configuration message of a UE, where the measurement configuration message includes the UE-level measurement reference signal configuration information;
S202: performing the measurement according to the measurement configuration message and reporting the measurement result.

Optionally, the UE-level measurement reference signal configuration information specifically includes: Synchronization Signal block, SS block, configuration information.

Optionally, the SS block configuration information includes SS block configuration information of neighboring cells.

Optionally, the measurement result includes:
Reference Signal Received Power of SS Blocks, SS-RSRP, and/or Time Difference of Arrival of SS blocks, SS-TDOA.

Optionally, the measurement result further includes:
the cell identity and/or SS block time index, corresponding to the SS-RSRP.

Optionally, the UE-level measurement reference signal configuration information specifically includes: Channel State Information-Reference Signal, CSI-RS, configuration information.

Optionally, the measurement result includes one or a combination of:
Reference Signal Received Power of Channel State Information, CSI-RSRP, and CSI-RS index;
Time Difference of Arrival, TDOA, of CSI-RSs.

Optionally, the measurement configuration message and/or the measurement result is/are transmitted by a radio resource control protocol message or 5G positioning protocol message.

The specific positioning flow will be illustrated below in combination with both the terminal and the network-side device.

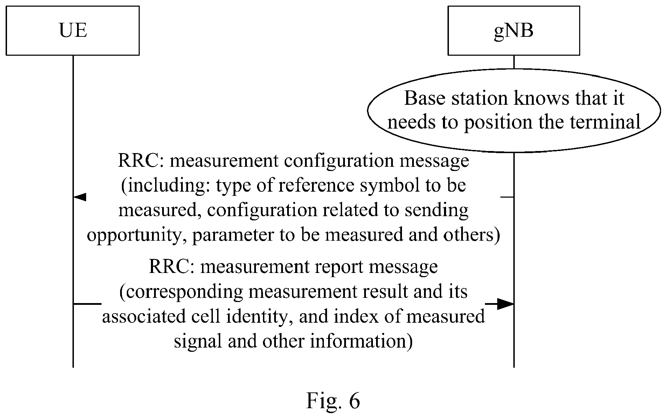

Referring to Fig.6, when knowing that a terminal (UE) needs to be positioned, the network-side device (e.g., gNB) may send the configuration information of the above positioning signal to the terminal via the measurement configuration message in the process in the positioning protocol or RRC protocol, where the measurement configuration message specifically includes: the type of the signal that needs to be measured by the UE (PSS/SSS or CSI-RS or the like), relevant identification information thereof (e.g., CSI RS index, SS block set and the like), parameters to be measured(e.g., RSRP, TDOA and the like), the period of transmission, position, muting information of the reference signal, and others. The terminal measures the corresponding parameters for the configured reference signal according to the received measurement configuration information sent by the network, and reports the measurement result to the network.

Here, the gNB may know that it will position the terminal according to the positioning server or core network node, and the gNB configures that the information of the reference signal to be measured by the UE is sent to the terminal via the RRC signalling. The result measured by the terminal is reported to the gNB via the RRC message. The gNB may calculate the position information of the terminal by itself, or may forward the measurement result reported by the terminal to the external positioning server which calculates the position of the terminal.

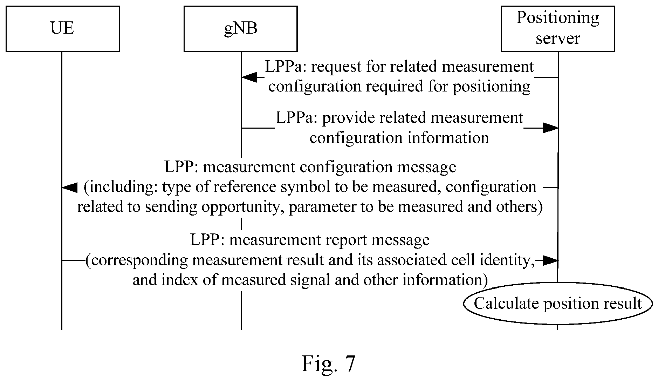

The positioning flow may be completed by a plurality of devices at the network side, for example, referring to Fig.7, the positioning server sends a positioning request to the gNB to instruct the gNB to provide the relevant information on the measurement configuration. The gNB sends the measurement configuration information to the positioning server through the positioning auxiliary protocol similar to the LTE Positioning Protocol A (LPPa). The positioning server sends the measurement configuration information to the terminal through the positioning protocol between the positioning server and UE, e.g., the LTE Positioning Protocol (LPP). The terminal performs the corresponding positioning measurement according to the measurement configuration and reports the measurement result to the positioning server through the positioning protocol. Then the positioning server calculates the position of the terminal according to the measurement result reported by the UE.

The above illustration is described taking the LPP as an example. The development of the 5G positioning protocol may be based on the LTE Positioning Protocol (LPP) and LTE Positioning Protocol A (LPPa), or a new positioning protocol is defined for the NR

Corresponding to the above-mentioned methods, the embodiments of the present application further provide the following apparatuses.

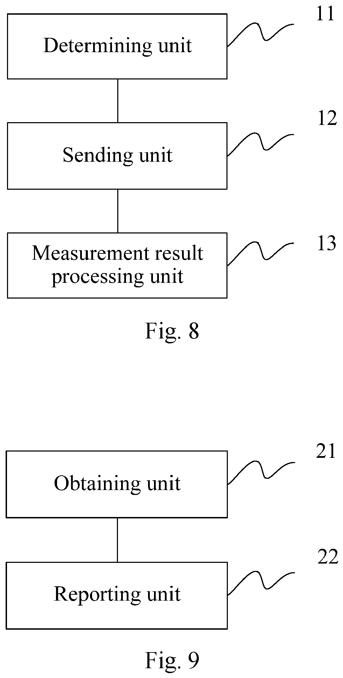

Referring to Fig.8, at the network side, a positioning apparatus provided by an embodiment of the present application includes:
a determining unit 11 configured to determine a measurement configuration message of a UE, where the measurement configuration message includes the UE-level measurement reference signal configuration information;
a sending unit 12 configured to send the measurement configuration message to the UE to instruct the UE to perform measurement and reporting;
a measurement result processing unit 13 configured to position the UE based on the measurement result reported by the UE.

Optionally, the UE-level measurement reference signal configuration information specifically includes: Synchronization Signal block, SS block, configuration information.

Optionally, the SS block configuration information includes SS block configuration information of neighboring cells.

Optionally, the measurement result includes:
Reference Signal Received Power of SS Blocks, SS-RSRP, and/or Time Difference of Arrival of SS blocks, SS-TDOA.

Optionally, the measurement result further includes:
the cell identity and/or SS block time index, corresponding to the SS-RSRP.

Optionally, the UE-level measurement reference signal configuration information specifically includes: Channel State Information-Reference Signal, CSI-RS, configuration information.

Optionally, the measurement result includes one or a combination of:
Reference Signal Received Power of Channel State Information, CSI-RSRP, and CSI-RS index;
Time Difference of Arrival, TDOA, of CSI-RSs.

Optionally, the measurement configuration message and/or the measurement result is/are transmitted by a radio resource control protocol message or 5G positioning protocol message.

Referring to Fig.9, at the UE side, a measurement reporting apparatus provided by an embodiment of the present application includes:
an obtaining unit 21 configured to obtain a measurement configuration message of a UE, where the measurement configuration message includes the UE-level measurement reference signal configuration information;
a reporting unit 22 configured to perform the measurement according to the measurement configuration message and report the measurement result.

Optionally, the UE-level measurement reference signal configuration information specifically includes: Synchronization Signal block, SS block, configuration information.

Optionally, the SS block configuration information includes SS block configuration information of neighboring cells.

Optionally, the measurement result includes:
Reference Signal Received Power of SS Blocks, SS-RSRP, and/or Time Difference of Arrival of SS blocks, SS-TDOA.

Optionally, the measurement result further includes:
the cell identity and/or SS block time index, corresponding to the SS-RSRP.

Optionally, the UE-level measurement reference signal configuration information specifically includes: Channel State Information-Reference Signal, CSI-RS, configuration information.

Optionally, the measurement result includes one or a combination of:
Reference Signal Received Power of Channel State Information, CSI-RSRP, and CSI-RS index;
Time Difference of Arrival, TDOA, of CSI-RSs.

Optionally, the measurement configuration message and/or the measurement result is/are transmitted by a radio resource control protocol message or 5G positioning protocol message.

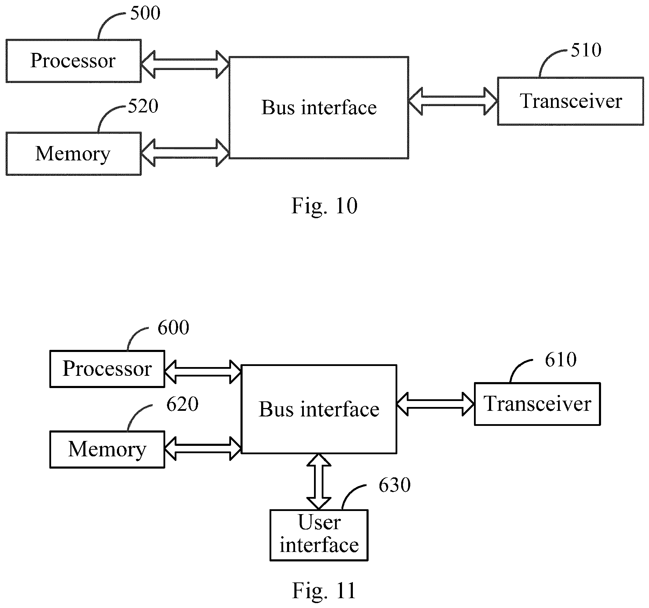

Referring to Fig. 10, at the network side, another positioning apparatus provided by an embodiment of the present application includes:
a processor 500 configured to read the programs in a memory 520 to perform the process of:
   determining a measurement configuration message of a UE, where the measurement configuration message includes the UE-level measurement reference signal configuration information;
   sending the measurement configuration message to the UE via a transceiver 510 to instruct the UE to perform the measurement and reporting; positioning the UE based on the measurement result reported by the UE.

Optionally, the UE-level measurement reference signal configuration information specifically includes: Synchronization Signal block, SS block, configuration information.

Optionally, the SS block configuration information includes SS block configuration information of neighboring cells.

Optionally, the measurement result includes:
Reference Signal Received Power of SS Blocks, SS-RSRP, and/or Time Difference of Arrival of SS blocks, SS-TDOA.

Optionally, the measurement result further includes:
the cell identity and/or SS block time index, corresponding to the SS-RSRP.

Optionally, the UE-level measurement reference signal configuration information specifically includes: Channel State Information-Reference Signal, CSI-RS, configuration information.

Optionally, the measurement result includes one or a combination of:
Reference Signal Received Power of Channel State Information, CSI-RSRP, and CSI-RS index;
Time Difference of Arrival, TDOA, of CSI-RSs.

Optionally, the measurement configuration message and/or the measurement result is/are transmitted by a radio resource control protocol message or 5G positioning protocol message.

The transceiver 510 is configured to receive and send the data under the control of the processor 500.

Here, in Fig. 10, the bus architecture can include any numbers of interconnected buses and bridges, and specifically link various circuits of one or more processors represented by the processor 500 and the memory(s) represented by the memory 520. The bus architecture can further link various other circuits such as peripheral device, voltage regulator and power management circuit, which are all well known in the art and thus will not be further described again herein. The bus interface provides an interface. The transceiver 510 can be a plurality of elements, i.e., include a transmitter and a receiver, and provide the units for communicating with various other devices over the transmission media. The processor 500 is responsible for managing the bus architecture and general processing, and the memory 520 can store the data used by the processor 500 when performing the operations.

The processor 500 can be Central Processing Unit (CPU), Application Specific Integrated Circuit (ASIC), Field-Programmable Gate Array (FPGA) or Complex Programmable Logic Device (CPLD).

Referring to Fig.11, at the UE side, another measurement reporting apparatus provided by an embodiment of the present application includes:
a processor 600 configured to read the programs in a memory 620 to perform the process of:
   obtaining a measurement configuration message of a UE, where the measurement configuration message includes the UE-level measurement reference signal configuration information;
   performing the measurement according to the measurement configuration message and reporting the measurement result.

Optionally, the UE-level measurement reference signal configuration information specifically includes: Synchronization Signal block, SS block, configuration information.

Optionally, the SS block configuration information includes SS block configuration information of neighboring cells.

Optionally, the measurement result includes:
Reference Signal Received Power of SS Blocks, SS-RSRP, and/or Time Difference of Arrival of SS blocks, SS-TDOA.

Optionally, the measurement result further includes:
the cell identity and/or SS block time index, corresponding to the SS-RSRP.

Optionally, the UE-level measurement reference signal configuration information specifically includes: Channel State Information-Reference Signal, CSI-RS, configuration information.

Optionally, the measurement result includes one or a combination of:
Reference Signal Received Power of Channel State Information, CSI-RSRP, and CSI-RS index;
Time Difference of Arrival, TDOA, of CSI-RSs.

Optionally, the measurement configuration message and/or the measurement result is/are transmitted by a radio resource control protocol message or 5G positioning protocol message.

The transceiver 610 configured to receive and send the data under the control of the processor 600.

Here, in Fig.11, the bus architecture can include any numbers of interconnected buses and bridges, and specifically link various circuits of one or more processors represented by the processor 600 and the memory represented by the memory 620. The bus architecture can further link various other circuits such as peripheral device, voltage regulator and power management circuit, which are all well known in the art and thus will not be further described again herein. The bus interface provides an interface. The transceiver 610 can be a plurality of elements, i.e., include a transmitter and a receiver, and provide the units for communicating with various other devices over the transmission media. For different user equipments, the user interface 630 can also be the interface capable of inter-connecting or exter-connecting with the required devices, and the connected devices include but not limited to keypad, display, loudspeaker, microphone, joystick and the like.

The processor 600 is responsible for managing the bus architecture and general processing, and the memory 620 can store the data used by the processor 600 when performing the operations.

Optionally, the processor 600 can be Central Processing Unit (CPU), Application Specific Integrated Circuit (ASIC), Field-Programmable Gate Array (FPGA) or Complex Programmable Logic Device (CPLD).

It should be understood by those skilled in the art that the embodiments of the invention can provide methods, systems and computer program products. Thus the invention can take the form of hardware embodiments alone, software embodiments alone, or embodiments combining the software and hardware aspects. Also the invention can take the form of computer program products implemented on one or more computer usable storage mediums (including but not limited to magnetic disk memories, CD-ROMs, optical memories and the like) containing computer usable program codes therein.

The invention is described by reference to the flow charts and/or the block diagrams of the methods, the devices (systems) and the computer program products according to the embodiments of the invention. It should be understood that each process and/or block in the flow charts and/or the block diagrams, and a combination of processes and/or blocks in the flow charts and/or the block diagrams can be implemented by the computer program instructions. These computer program instructions can be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

Although the preferred embodiments of the invention have been described, those skilled in the art can make additional alterations and modifications to these embodiments once they learn about the basic creative concepts.

Evidently those skilled in the art can make various modifications and variations to the embodiments of the invention without departing from the scope of the claims of the invention. Thus the invention is also intended to encompass these modifications and variations therein as long as these modifications and variations to the embodiments of the invention come into the scope of the claims of the invention.

## Claims

1. A positioning method performed by a network side positioning apparatus, comprising:
determining (S101) a measurement configuration message of a User Equipment, UE, wherein the measurement configuration message comprises UE-level measurement reference signal configuration information;
sending (SI02) the measurement configuration message to the UE to instruct the UE to perform measurement and reporting;
positioning (S103) the UE based on a measurement result reported by the UE;
**characterized in that**:
wherein the UE-level measurement reference signal configuration information particularly comprises: Synchronization Signal block, SS block, configuration information;
wherein the measurement result comprises: Reference Signal Received Power of SS Blocks, SS-RSRP, and/or Time Difference of Arrival of SS blocks, SS-TDOA;
wherein the measurement result further comprises:
a cell identity and an SS block time index, corresponding to the SS-RSRP.

2. The method according to claim 1, wherein the SS block configuration information comprises SS block configuration information of neighboring cells.

3. The method according to claim 1, wherein the measurement configuration message and/or the measurement result is/are transmitted by a radio resource control protocol message or a 5G positioning protocol message.

4. A measurement reporting method performed by a user equipment, comprising:
obtaining (S201) a measurement configuration message of a User Equipment, UE, wherein the measurement configuration message comprises UE-level measurement reference signal configuration information;
performing (S202) a measurement according to the measurement configuration message and reporting a measurement result;
**characterized in that**:
wherein the UE-level measurement reference signal configuration information particularly comprises: Synchronization Signal block, SS block, configuration information;
wherein the measurement result comprises:
Reference Signal Received Power of SS Blocks, SS-RSRP, and/or Time Difference of Arrival of SS blocks, SS-TDOA;
wherein the measurement result further comprises:
a cell identity and an SS block time index, corresponding to the SS-RSRP.

5. The method according to claim 4, wherein the SS block configuration information comprises SS block configuration information of neighboring cells.

6. The method according to claim 4, wherein the measurement configuration message and/or the measurement result is/are received by a radio resource control protocol message or a 5G positioning protocol message.

7. A network side positioning apparatus, comprising:
a determining unit (11) configured to determine a measurement configuration message of a User Equipment, UE, wherein the measurement configuration message comprises UE-level measurement reference signal configuration information;
a sending unit (12) configured to send the measurement configuration message to the UE to instruct the UE to perform measurement and reporting;
a measurement result processing unit (13) configured to position the UE based on a measurement result reported by the UE;
**characterized in that**:
wherein the UE-level measurement reference signal configuration information particularly comprises: Synchronization Signal block, SS block, configuration information;
wherein the measurement result comprises: Reference Signal Received Power of SS Blocks, SS-RSRP, and/or Time Difference of Arrival of SS blocks, SS-TDOA;
wherein the measurement result further comprises:
a cell identity and an SS block time index, corresponding to the SS-RSRP.

8. The apparatus according to claim 7, wherein the SS block configuration information comprises SS block configuration information of neighboring cells.

9. The apparatus according to claim 7, wherein the measurement configuration message and/or the measurement result is/are transmitted by a radio resource control protocol message or a 5G positioning protocol message.

10. A measurement reporting apparatus in a user equipment, comprising:
an obtaining unit (21) configured to obtain a measurement configuration message of a User Equipment, UE, wherein the measurement configuration message comprises UE-level measurement reference signal configuration information;
a reporting unit (22) configured to perform measurement according to the measurement configuration message and report a measurement result;
**characterized in that**:
wherein the UE-level measurement reference signal configuration information particularly comprises: Synchronization Signal block, SS block, configuration information;
wherein the measurement result comprises:
Reference Signal Received Power of SS Blocks, SS-RSRP, and/or Time Difference of Arrival of SS blocks, SS-TDOA;
wherein the measurement result further comprises:
a cell identity and an SS block time index, corresponding to the SS-RSRP.

11. The apparatus according to claim 10, wherein the SS block configuration information comprises SS block configuration information of neighboring cells.

12. The method according to claim 10, wherein the measurement configuration message and/or the measurement result is/are received by a radio resource control protocol message or a 5G positioning protocol message.

## Patentansprüche

1. Positionierungsverfahren, das durch eine netzseitige Positionierungsvorrichtung durchgeführt wird und das Folgendes umfasst:
Bestimmen (S101) einer Messungskonfigurationsnachricht eines Anwenderendgeräts, UE, wobei die Messungskonfigurationsnachricht Messungsreferenzsignal-Konfigurationsinformationen auf UE-Ebene umfasst;
Senden (S102) der Messungskonfigurationsnachricht an das UE, um das UE anzuweisen, Messung und Meldung durchzuführen;
Positionieren (S103) des UE auf der Grundlage eines Messergebisses, das durch das UE gemeldet wird;
**dadurch gekennzeichnet, dass**:
die Messungsreferenzsignal-Konfigurationsinformationen auf UE-Ebene insbesondere Folgendes umfassen: Synchronisierungssignalblock-Konfigurationsinformationen, SS-Block-Konfigurationsinformationen;
das Messergebnis Folgendes umfasst: eine Referenzsignalempfangsleistung von SS-Blöcken, SS-RSRP, und/oder einen Zeitunterschied des Eintreffens von SS-Blöcken, SS-TDOA;
das Messergebnis ferner Folgendes umfasst:
eine Zellenkennung und einen SS-Block-Zeitindex, die der SS-RSRP entsprechen.

2. Verfahren nach Anspruch 1, wobei die SS-Block-Konfigurationsinformationen SS-Block-Konfigurationsinformationen benachbarter Zellen umfassen.

3. Verfahren nach Anspruch 1, wobei die Messungskonfigurationsnachricht und/oder das Messergebnis durch eine Funkbetriebsmittel-Steuerprotokollnachricht oder eine 5G-Positionierungsprotokollnachricht gesendet werden.

4. Messungsmeldeverfahren, das durch ein Anwenderendgerät durchgeführt wird, das Folgendes umfasst:
Erhalten (S201) einer Messungskonfigurationsnachricht eines Anwenderendgeräts, UE, wobei die Messungskonfigurationsnachricht Messungsreferenzsignal-Konfigurationsinformationen auf UE-Ebene umfasst;
Durchführen (S202) einer Messung gemäß der Messungskonfigurationsnachricht und Melden eines Messergebnisses;
**dadurch gekennzeichnet, dass**:
die Messungsreferenzsignal-Konfigurationsinformationen auf UE-Ebene insbesondere Folgendes umfassen: Synchronisierungssignalblock-Konfigurationsinformationen, SS-Block-Konfigurationsinformationen;
das Messergebnis Folgendes umfasst:
eine Referenzsignalempfangsleistung von SS-Blöcken, SS-RSRP, und/oder einen Zeitunterschied des Eintreffens von SS-Blöcken, SS-TDOA;
das Messergebnis ferner Folgendes umfasst:
eine Zellenkennung und einen SS-Block-Zeitindex, die der SS-RSRP entsprechen.

5. Verfahren nach Anspruch 4, wobei die SS-Block-Konfigurationsinformationen SS-Block-Konfigurationsinformationen benachbarter Zellen umfassen.

6. Verfahren nach Anspruch 4, wobei die Messungskonfigurationsnachricht und/oder das Messergebnis durch eine Funkbetriebsmittel-Steuerprotokollnachricht oder eine 5G-Positionierungsprotokollnachricht gesendet werden.

7. Netzseitige Positionierungsvorrichtung, die Folgendes umfasst:
eine Bestimmungseinheit (11), die konfiguriert ist, eine Messungskonfigurationsnachricht eines Anwenderendgeräts, UE, zu bestimmen, wobei die Messungskonfigurationsnachricht Messungsreferenzsignal-Konfigurationsinformationen auf UE-Ebene umfasst;
eine Sendeeinheit (12), die konfiguriert ist, die Messungskonfigurationsnachricht an das UE zu senden, um das UE anzuweisen, Messung und Meldung durchzuführen;
eine Messergebnis-Verarbeitungseinheit (13), die konfiguriert ist, das UE auf der Grundlage eines Messergebnisses zu positionieren, das durch das UE gemeldet wird;
**dadurch gekennzeichnet, dass**:
die Messungsreferenzsignal-Konfigurationsinformationen auf UE-Ebene insbesondere Folgendes umfassen: Synchronisierungssignalblock-Konfigurationsinformationen, SS-Block-Konfigurationsinformationen;
das Messergebnis Folgendes umfasst: eine Referenzsignalempfangsleistung von SS-Blöcken, SS-RSRP, und/oder einen Zeitunterschied des Eintreffens von SS-Blöcken, SS-TDOA;
das Messergebnis ferner Folgendes umfasst:
eine Zellenkennung und einen SS-Block-Zeitindex, die der SS-RSRP entsprechen.

8. Vorrichtung nach Anspruch 7, wobei die SS-Block-Konfigurationsinformationen SS-Block-Konfigurationsinformationen benachbarter Zellen umfassen.

9. Vorrichtung nach Anspruch 7, wobei die Messungskonfigurationsnachricht und/oder das Messergebnis durch eine Funkbetriebsmittel-Steuerprotokollnachricht oder eine 5G-Positionierungsprotokollnachricht gesendet werden.

10. Messungsmeldevorrichtung in einem Anwenderendgerät, die Folgendes umfasst:
eine Erfassungseinheit (21), die konfiguriert ist, eine Messungskonfigurationsnachricht eines Anwenderendgeräts, UE, zu erhalten, wobei die Messungskonfigurationsnachricht Messungsreferenzsignal-Konfigurationsinformationen auf UE-Ebene umfasst;
eine Meldeeinheit (22), die konfiguriert ist, eine Messung gemäß der Messungskonfigurationsnachricht durchzuführen und ein Messergebnis zu melden;
**dadurch gekennzeichnet, dass**:
die Messungsreferenzsignal-Konfigurationsinformationen auf UE-Ebene insbesondere Folgendes umfassen: Synchronisierungssignalblock-Konfigurationsinformationen, SS-Block-Konfigurationsinformationen;
das Messergebnis Folgendes umfasst:
eine Referenzsignalempfangsleistung von SS-Blöcken, SS-RSRP, und/oder einen Zeitunterschied des Eintreffens von SS-Blöcken, SS-TDOA;
das Messergebnis ferner Folgendes umfasst:
eine Zellenkennung und einen SS-Block-Zeitindex, die der SS-RSRP entsprechen.

11. Vorrichtung nach Anspruch 10, wobei die SS-Block-Konfigurationsinformationen SS-Block-Konfigurationsinformationen benachbarter Zellen umfassen.

12. Vorrichtung nach Anspruch 10, wobei die Messungskonfigurationsnachricht und/oder das Messergebnis durch eine Funkbetriebsmittel-Steuerprotokollnachricht oder eine 5G-Positionierungsprotokollnachricht gesendet werden.

## Revendications

1. Procédé de positionnement effectué par un appareil de positionnement côté réseau, comprenant de :
déterminer (S101) un message de configuration de mesure d'un équipement utilisateur, UE, dans lequel le message de configuration de mesure comprend des informations de configuration de signal de référence de mesure au niveau de l'UE;
envoyer (S102) le message de configuration de mesure à l'UE pour donner l'instruction à l'UE d'effectuer une mesure et un rapportage;
positionner (S103) l'UE sur la base d'un résultat de mesure rapporté par l'UE;
**caractérisé en ce que** :
dans lequel les informations de configuration de signal de référence de mesure au niveau de l'UE comprennent en particulier : des informations de configuration de blocs de signaux de synchronisation, blocs SS;
dans lequel le résultat de mesure comprend : la puissance reçue du signal de référence de blocs SS, SS-RSRP, et/ou la différence de temps d'arrivée de blocs SS, SS-TDOA;
dans lequel le résultat de mesure comprend en outre :
une identité de cellule et un indice de temps de blocs SS, correspondant au SS-RSRP.

2. Procédé selon la revendication 1, dans lequel les informations de configuration de blocs SS comprennent des informations de configuration de blocs SS de cellules voisines.

3. Procédé selon la revendication 1, dans lequel le message de configuration de mesure et/ou le résultat de mesure est/sont transmis par un message de protocole de commande de ressources radio ou un message de protocole de positionnement 5G.

4. Procédé de rapportage de mesure effectué par un équipement utilisateur, comprenant de :
obtenir (S201) un message de configuration de mesure d'un équipement utilisateur, UE, dans lequel le message de configuration de mesure comprend des informations de configuration de signal de référence de mesure au niveau de l'UE;
effectuer (S202) une mesure en fonction du message de configuration de mesure et rapporter un résultat de mesure;
**caractérisé en ce que** :
dans lequel les informations de configuration de signal de référence de mesure au niveau de l'UE comprennent en particulier :
des informations de configuration de blocs de signaux de synchronisation, blocs SS;
dans lequel le résultat de la mesure comprend :
la puissance reçue du signal de référence de blocs SS, SS-RSRP, et/ou la différence de temps d'arrivée de blocs SS, SS-TDOA;
dans lequel le résultat de la mesure comprend en outre :
une identité de cellule et un indice de temps de blocs SS, correspondant au SS-RSRP.

5. Procédé selon la revendication 4, dans lequel les informations de configuration de blocs SS comprennent des informations de configuration de blocs SS de cellules voisines.

6. Procédé selon la revendication 4, dans lequel le message de configuration de mesure et/ou le résultat de mesure est/sont reçu(s) par un message de protocole de commande de ressources radio ou un message de protocole de positionnement 5G.

7. Appareil de positionnement côté réseau, comprenant :
une unité de détermination (11) configurée pour déterminer un message de configuration de mesure d'un équipement utilisateur, UE, dans lequel le message de configuration de mesure comprend des informations de configuration de signal de référence de mesure au niveau de l'UE;
une unité d'envoi (12) configurée pour envoyer le message de configuration de mesure à l'UE pour donner l'instruction à l'UE d'effectuer une mesure et un rapportage;
une unité de traitement de résultat de mesure (13) configurée pour positionner l'UE sur la base d'un résultat de mesure rapporté par l'UE;
**caractérisé en ce que** :
dans lequel les informations de configuration de signal de référence de mesure au niveau de l'UE comprennent en particulier : des informations de configuration de blocs de signaux de synchronisation, blocs SS;
dans lequel le résultat de la mesure comprend : la puissance reçue du signal de référence de blocs SS, SS-RSRP, et/ou la différence de temps d'arrivée de blocs SS, SS-TDOA;
dans lequel le résultat de la mesure comprend en outre :
une identité de cellule et un indice de temps de blocs SS, correspondant au SS-RSRP.

8. Appareil selon la revendication 7, dans lequel les informations de configuration de blocs SS comprennent des informations de configuration de blocs SS de cellules voisines.

9. Appareil selon la revendication 7, dans lequel le message de configuration de mesure et/ou le résultat de mesure est/sont transmis par un message de protocole de commande de ressources radio ou un message de protocole de positionnement 5G.

10. Appareil de rapport de mesure dans un équipement utilisateur, comprenant :
une unité d'obtention (21) configurée pour obtenir un message de configuration de mesure d'un équipement utilisateur, UE, dans lequel le message de configuration de mesure comprend des informations de configuration de signal de référence de mesure au niveau de l'UE;
une unité de rapportage (22) configurée pour effectuer une mesure en fonction du message de configuration de mesure et rapporter un résultat de mesure;
**caractérisé en ce que** :
dans lequel les informations de configuration de signal de référence de mesure au niveau de l'UE comprennent en particulier : des informations de configuration de blocs de signaux de synchronisation, blocs SS;
dans lequel le résultat de la mesure comprend :
la puissance reçue du signal de référence de blocs SS, SS-RSRP, et/ou la différence de temps d'arrivée de blocs SS, SS-TDOA;
dans lequel le résultat de la mesure comprend en outre :
une identité de cellule et un indice de temps de blocs SS, correspondant au SS-RSRP.

11. Appareil selon la revendication 10, dans lequel les informations de configuration de blocs SS comprennent des informations de configuration de blocs SS de cellules voisines.

12. Procédé selon la revendication 10, dans lequel le message de configuration de mesure et/ou le résultat de mesure est/sont reçu(s) par un message de protocole de commande de ressources radio ou un message de protocole de positionnement 5G.
